# EUROPÄISCHE PATENTSCHRIFT

(11) **EP 3 776 361 B1**
(45) Veröffentlichungstag und Bekanntmachung des Hinweises auf die Patenterteilung: **11.10.2023**
(21) Anmeldenummer: 19713003.2
(22) Anmeldetag: 22.03.2019
(51) Int. Cl.: G06K 19/077

(54) **PASSIVER TRANSPONDER MIT ABSCHIRMUNG**
PASSIVE TRANSPONDER HAVING A SHIELD
TRANSPONDEUR PASSIF AVEC ÉCRAN

(30) Priorität: 28.03.2018 DE 102018204766
(43) Veröffentlichungstag der Anmeldung: 17.02.2021
(73) Patentinhaber: Life Science Inkubator Betriebs GmbH & Co. KG, 53175 Bonn (DE)
(72) Erfinder: TUTSCH, Fabian, 53175 Bonn (DE); VARGHESE, Divin, 53173 Bonn (DE); DOMNICH, Alexej, 53299 Bonn (DE)
(74) Vertreter: Pfenning, Meinig & Partner mbB
(86) Internationale Anmeldenummer: PCT/EP2019/057188
(87) Internationale Veröffentlichungsnummer: WO 2019/185458

(56) Entgegenhaltungen:
- DE-A1- 10 149 126
- DE-A1-102012 023 445
- US-A- 6 034 651

## Beschreibung

Die Erfindung betrifft einen passiven Transponder mit zumindest einer Spule, wobei der Transponder eine elektrisch leitfähige Abschirmung aufweist, welche die Windungen der Spule von beiden Seiten überdeckt. Ein Zentralbereich der Spule, um den die Windungen gewunden sind, wird dabei von der Abschirmung nicht überdeckt. Die Abschirmung weist in jenen Flächen, mit denen sie die Windungen überdeckt, zumindest eine Unterbrechung auf, mit der ein Stromfluss in der Abschirmung verhinderbar ist.

Beim Einsatz von elektrisch passiven Implantaten, wie z.B. eines kapazitiven Drucksensors mit elektrischer Luftspule zur Detektion von propagierenden Pulswellen, kommt es bei extrakorporalen induktiv gekoppelten System zum schlechten Signal-Rausch-Verhältnissen, bedingt unter anderem durch die elektrischen Eigenschaften des Mediums (z.B. Blut). Eine Abhilfe hierfür wäre die Vergrößerung des Abstandes der elektrischen Komponenten (z.B. elektrische Leitungen) des Implantats zum Medium, was jedoch für den Einsatz in einem Blutgefäß sehr kritisch sein kann. Das Implantat sollte grundsätzlich so dünn wie möglich sein, um den Blutstrom nicht zu behindern oder als Widerstand Turbulenzen zu erzeugen.

Beim Einsatz von Spulen im menschlichen Körper oder im Blut zur Herstellung einer induktiven Kopplung zwischen einem implantierten Transponder und einer externen Ausleseeinrichtung verringert sich deren Gütefaktor im Vergleich zum Einsatz in Luft dramatisch. Ebenso erhöht sich die parasitäre Kapazität der Spule. Die Verringerung des Gütefaktors der Spule wird hervorgerufen durch Wirbelstromverluste. Diese führen in direkter Nähe der Windungen zu Verlusten im Medium, die sich dann als reduzierter Gütefaktor der Spule messen lassen. Die Veränderung der parasitären Kapazität ist auf die von Luft verschiedenen dielektrischen Eigenschaften des Bluts zurückzuführen.

Die Verringerung des Gütefaktors ist insofern störend, als damit eine Verschlechterung der Kopplung mit der extrakorporalen Auslesespule einhergeht und somit das gemessene Signal stark abgeschwächt wird.

DE 10 2012 023 445 A1 beschreibt einen Transponder, welcher mindestens eine metallische Abschirmung mit mindestens einer Unterbrechung umfasst. Die metallische Abschirmung umgibt die Antennenspule, welche mindestens eine Windung hat.

Die DE 10 149 126 A1 beschreibt ein Verfahren zum Herstellen einer Abschirmung für einen Transponder, der zumindest einen Chip und eine Antennenstruktur mit einer anwendungsspezifischen räumlichen Ausdehnung aufweist, wobei die Abschirmung auf ein Substrat ausgebildet wird, und wobei ferromagnetische Partikel auf einen Bereich des Substrats aufgebracht werden, der zumindest die räumliche Ausdehnung der Antennenstruktur des Transponders aufweist.

Die US 6,034,651 A beschreibt eine Antennenspule mit flachen Windungen mit einer vorgegebenen Form und einer leitenden Abschirmung, die den Windungen zugewandt ist. Die leitfähige Abschirmung hat im Wesentlichen die gleiche Form wie die Windungen und umfasst einen eingeschnittenen Bereich.

Aufgabe der Erfindung ist es, einen passiven Transponder anzugeben, der besser induktiv an eine Auslesespule koppelt, wenn er in einem flüssigen Medium, wie beispielsweise Blut, zum Einsatz kommt. Dabei soll die Dicke des Transponders gering gehalten werden, um einen Flüssigkeitsstrom entlang des Transponders nicht zu behindern.

Die Aufgabe wird gelöst durch den passiven Transponder nach Anspruch 1. Die abhängigen Ansprüche geben vorteilhafte Weiterbildungen des erfindungsgemäßen passiven Transponders nach Anspruch 1 an.

Erfindungsgemäß wird ein passiver Transponder angegeben, der zumindest eine Spule mit einer Mehrzahl an um einen Zentralbereich gewundenen Windungen aufweist. Die Windungen können aus einer oder mehreren um den Zentralbereich gewundenen Leiterbahnen gebildet sein. Vorteilhaft wird unter einer Windung ein Abschnitt einer Leiterbahn verstanden, der den Zentralbereich einmal vollständig umläuft. Vorteilhafterweise kann eine Leiterbahn zu mehreren Windungen gewunden sein. Die Leiterbahn umläuft dann den Zentralbereich mehrmals vollständig. Die Spule ist erfindungsgemäß eine Zylinderspule. Bei einer Flachspule verlaufen die Windungen in einer gemeinsamen Fläche, die eben sein kann, jedoch auch gekrümmt sein kann. Bei einer Zylinderspule sind die Windungen entlang einer Zylinderachse, die vorteilhaft gerade sein kann, nebeneinander angeordnet, sodass die Zylinderachse durch Mittelpunkte der Windungen verläuft. Vorteilhafterweise haben die Windungen einer Zylinderspule in der Mehrzahl oder alle den gleichen Durchmesser. Die Form einer Zylinderspule kann als Zylinder oder Zylinderrohr verstanden werden. Die beiden Begriffe sollen im Rahmen dieses Dokumentes gleichbedeutend verwendet werden. Die Zylinderspule hat dann eine äußere Oberfläche oder äußere Zylinderoberfläche und eine innere Oberfläche oder Zylinderoberfläche. Die äußere Zylinderoberfläche umgreift dann vorzugsweise die Windungen und die innere Zylinderoberfläche wird vorzugsweise von den Windungen umlaufen.

Erfindungsgemäß weist der passive Transponder außerdem zumindest eine elektrisch leitfähige Abschirmung auf. Die Abschirmung ist dabei so angeordnet, dass sie zwei einander bezüglich der Windungen gegenüberliegende Spulenoberflächen überdeckt, wobei jeweils die gegenüberliegenden Spulenoberflächen von gleichen Abschnitten der Windungen aufgespannt werden. Die Abschirmung erstreckt sich also über jene Bereiche der Spule, in denen die Spule sich flächig erstreckt. Ist die Spule in einem nicht erfindungsgemäßen Fall eine Flachspule, so kann sich die Abschirmung über und unter jener Fläche flächig erstrecken, in der die Windungen der Flachspule verlaufen. Ist die Spule erfindungsgemäß eine Zylinderspule, so erstreckt sich die Abschirmung zum einen über die äußere Zylinderoberfläche und zum anderen über die innere Zylinderoberfläche.

Als von den Windungen aufgespannt sollen vorteilhaft jene Spulenoberflächen angesehen werden, in der die Windungen bzw. die Leiterbahn der Windungen in zwei Dimensionen verläuft. Als von den Windungen oder den Leiterbahnen aufgespannte Oberflächen können also jene Flächen angesehen werden, zu denen die Windungen und/oder Leiterbahnen parallel verlaufen. Erfindungsgemäß ist die Abschirmung so ausgestaltet, dass sie den Zentralbereich zumindest teilweise nicht überdeckt. Auf diese Weise kann gewährleistet werden, dass ein Magnetfeld von außen einen Strom in den Windungen der Spule induzieren kann. In dem nicht erfindungsgemäßen Fall einer Flachspule wird also jener Bereich nicht von der Abschirmung überdeckt, um den die Leiterbahnen herum verlaufen, in dem jedoch keine Leiterbahnen angeordnet sind. Im Falle einer Zylinderspule wird ein nicht-verschwindender Bereich um die Spulenachse nicht von der Abschirmung überdeckt, was insbesondere bedeutet, dass die Stirnseiten der Zylinderspule offen bleiben.

Die Abschirmung kann einteilig oder mehrteilig ausgestaltet sein. Sie kann beispielsweise die Leiterbahnen umgreifen oder voneinander getrennte Bestandteile aufweisen, die jeweils über einer der gegenüberliegenden Spulenoberflächen angeordnet sind.

Erfindungsgemäß weist die Abschirmung in jenen Bereichen, in denen sie eine der Spulenoberflächen überdeckt, zumindest eine Unterbrechung auf. Dabei durchtrennt die Unterbrechung die Abschirmung in zum Verlauf der Windungen am Ort der Unterbrechung nicht paralleler Richtung. Die Leiterbahnen schneiden also die Unterbrechung in einem nicht verschwindendem Winkel. Auf diese Weise führt ein magnetisches Feld, das einen Stromfluss in den Windungen induziert, nicht zu einem Stromfluss in der Abschirmung. Die Unterbrechung durchtrennt die Abschirmung also so, dass ein Stromfluss bei Einwirkung eines Magnetfeldes, das einen Stromfluss in den Windungen induziert, verhinderbar ist. Die Unterbrechung kann durch einen Einschnitt gebildet sein oder auch durch einen Einsatz aus dielektrischem Material.

Vorteilhafterweise kann die Abschirmung ringförmig um den Zentralbereich verlaufen. Dabei kann im nicht erfindungsgemäßen Falle der Flachspule der Ring in radialer Richtung von der Unterbrechung durchtrennt sein. Im nicht erfindungsgemäßen Fall einer Flachspule kann die Unterbrechung bevorzugt senkrecht auf den Windungen am Ort der Unterbrechung stehen und/oder radial zu einem Zentrum verlaufen, um das die Windungen gewunden sind. Vorteilhafterweise kann die Unterbrechung als gerader Schlitz ausgestaltet sein.

Im Falle einer Zylinderspule kann die Unterbrechung vorteilhafterweise parallel zur Spulenachse verlaufen.

In einer vorteilhaften Ausgestaltung der Erfindung kann zwischen der Spule und der Abschirmung zumindest eine dielektrische Schicht bzw. elektrischisolierende Schicht angeordnet sein, welche die Spule gegen die Abschirmung elektrisch isoliert.

In einer weiteren vorteilhaften Ausgestaltung der Erfindung kann der passive Transponder eine elektrisch isolierende Schicht bzw. dielektrische Schicht auf der Abschirmung auf der von der Spule abgewandten Oberfläche aufweisen. Durch eine solche Abschirmung kann der Transponder gegen ein umgebendes Medium elektrisch isoliert werden. Eine solche Abschirmung ist insbesondere bei Verwendung des erfindungsgemäßen passiven Transponders in flüssigen Medien vorteilhaft. Vorteilhafterweise überdeckt die isolierende Schicht alle elektrisch leitfähigen Teile des Transponders vollständig.

In einer vorteilhaften Ausgestaltung der Erfindung kann die Spule mit einer Kapazität zu einem Schwingkreis verschaltet sein. Die Kapazität kann beispielsweise ein kapazitiver Drucksensor sein. Auf diese Weise kann mit dem passiven Transponder ein Druck eines Mediums gemessen und/oder überwacht werden, ohne eine elektrische Verbindung herstellen zu müssen. Besonders vorteilhaft kann der passive Transponder auch eine Vorrichtung zur Messung einer Pulswellengeschwindigkeit wie in EP 2668472 B1 beschrieben sein.

Vorteilhafterweise kann die Abschirmung dort, wo keine Unterbrechung vorliegt, Metallfolie und/oder leitfähigen Lack aufweisen oder daraus bestehen.

In einer vorteilhaften Ausgestaltung der Erfindung kann der passive Transponder zwei der Spulen aufweisen, die vorteilhaft in einer gemeinsamen Spulenfläche verlaufen können. Besonders bevorzugt können die zwei Spulen auf einem gemeinsamen dielektrischen Träger ausgebildet sein, der gleichzeitig auch als ein Teil der beschriebenen elektrisch isolierenden Schicht fungieren kann.

Die Abschirmung ist vorteilhaft so ausgestaltet, dass sie erlaubt, dass Magnetfelder die Spule durchdringen können. Sie sollte vorteilhaft die in der Spule induzierten Spannungen nicht schwächen oder dämpfen. Vorteilhafterweise sollte die Abschirmung dafür sorgen, dass die elektromagnetischen Felder nah bei der Spule konzentriert bleiben und sich nicht in ein den Transponder umgebenes Medium ausbreiten, da sonst Wirbelstromverluste entstehen.

Als Materialien für die Abschirmung eignen sich z. B. Aluminium, Gold, Kupfer, Silber und ähnliche.

Im folgenden soll die Erfindung anhand einiger Figuren beispielhaft erläutert werden. Gleiche Bezugszeichen kennzeichnen dabei gleiche oder entsprechende Merkmale. Die in den Figuren gezeigten Merkmale können auch unabhängig vom konkreten Beispiel realisiert werden und unter verschiedenen Beispielen kombiniert werden.
Figur 1 einen nicht erfindungsgemäßen passiven Transponder,
Figur 2 den in Figur 1 gezeigten nicht erfindungsgemäßen Transponder ohne die Abschirmung,
Figur 3 einen Querschnitt durch den in Figur 1 gezeigten nicht erfindungsgemäßen Transponder,
Figur 4 eine Schaltung zum Auslesen eines erfindungsgemäßen Transponders,
Figur 5 einen beispielhaften Messaufbau zum Auslesen eines Transponders,
Figur 6 eine Signalqualität eines passiven Transponders mit nichtabgeschirmter Spule in Luft und Blutersatz,
Figur 7 eine Signalqualität eines erfindungsgemäßen Transponders in Luft und in Blutersatz, und
Figur 8 einen erfindungsgemäßen Transponder, der als Pulswellengeschwindigkeitsmessvorrichtung ausgestaltet ist.

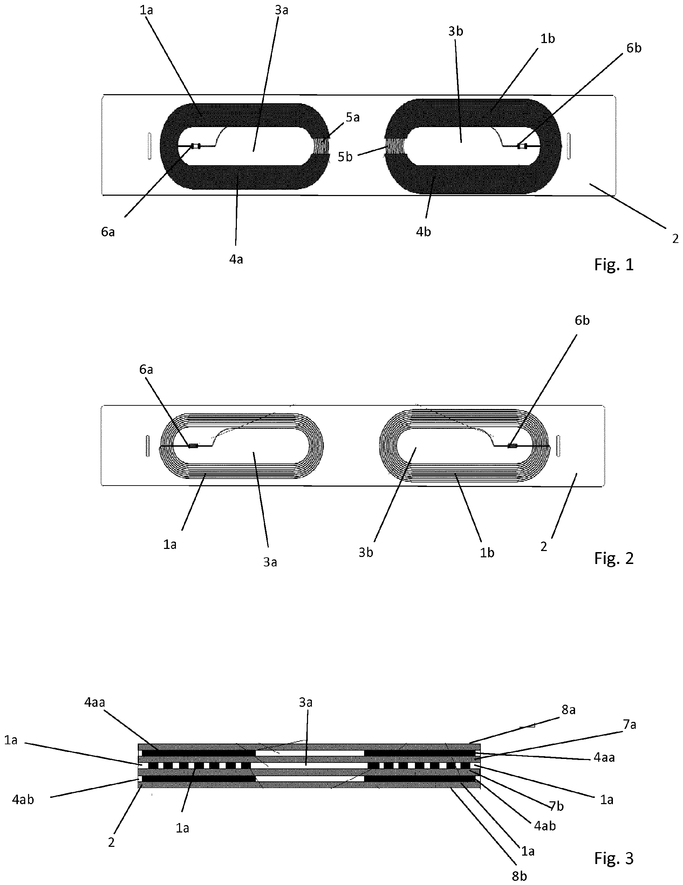

Figur 1 zeigt einen nicht erfindungsgemäßen passiven Transponder mit zwei Spulen 1a, 1b.

Figur 2 zeigt den in Figur 1 gezeigten passiven Transponder ohne Abschirmungen, sodass der Verlauf der Spulen 1a, 1b besser erkennbar ist.

Im in den Figuren 1 und 2 gezeigten Beispiel sind die Spulen mit einer Mehrzahl an um einen Zentralbereich 3a und 3b gewundenen Windungen auf einem Trägersubstrat 2 angeordnet. Wie in Figur 1 zu erkennen ist, weist der nicht erfindungsgemäße Transponder für jede der Spulen 1a, 1b eine elektrisch leitfähige Abschirmung 4a, 4b auf, die in Figur 2 zur Erkennbarkeit der Windungen weggelassen wurde. Die Abschirmungen 4a und 4b überdecken jene dem Betrachter zugewandten Spulenoberflächen, die von den Windungen aufgespannt werden. Die Abdeckungen 4a und 4b überdecken außerdem jene dem Betrachter abgewandten durch die Windungen aufgespannten Spulenoberflächen, die den dem Betrachter zugewandten Spulenoberflächen bezüglich der Windungen gegenüberliegen.

Die Abschirmungen 4a und 4b überdecken außerdem den Zentralbereich 3a, 3b der jeweiligen Spule 1a, 1b zumindest teilweise nicht, sodass ein magnetisches Feld die Spulen 1a und 1b durchdringen kann und auf diese Weise einen Strom in den Spulen 1a und 1b induzieren kann. Die Abschirmungen 4a und 4b weisen jeweils eine Unterbrechung 5a und 5b auf, die hier als zu den Leiterbahnen der Spulen 1a und 1b im Bereich der Unterbrechung 5a, 5b nicht parallel verlaufende Schlitze ausgestaltet sind. Im gezeigten Beispiel verlaufen die Schlitze senkrecht zum Verlauf der Leiterbahnen im Bereich der Unterbrechungen 5a, 5b. Die Spulen 1a und 1b und die Abschirmungen 4a und 4b haben im gezeigten Beispiel eine längliche Form mit zwei geraden, parallel zueinander verlaufenden, Abschnitten, die jeweils durch kreisbogenförmig gekrümmte Abschnitte ineinander übergehen. Die beiden Spulen 1a und 1b sind im gezeigten Beispiel und so angeordnet, dass jeweils zwei gerade Abschnitte der Spulen 1a und 1b auf einer gemeinsamen Gerade liegen. Die Spule 1a hat hier 9 Windungen und die Spule 1b hat 11 Windungen.

Im in den Figuren 1 und 2 gezeigten Beispiel sind die Spulen 1a und 1b jeweils mit einer Kapazität 6a bzw. 6b zu einem Schwingkreis verkoppelt. Die Kapazitäten 6a und 6b können beispielsweise kapazitive Drucksensoren sein. Im in Figur 1 und 2 gezeigten Beispiel sind sie parallel zu den Induktivitäten der Spulen 1a und 1b verschaltet.

Figur 3 zeigt einen Schnitt durch die Figur 1 gezeigte Ausgestaltung des nicht erfindungsgemäßen passiven Transponders, wobei der Schnitt im Bereich der geraden Bereiche der Spule 1a oder 1b in Richtung senkrecht zu dem Verlauf dieser geraden Bereiche und senkrecht zur Figurenebene der Figur 1 liegt.

Es ist in Figur 3 zu erkennen, dass die Spule 1a von der Abschirmung 4a überdeckt wird. Die Abschirmung 4a weist dabei zwei Teile 4aa und 4ab auf, die die Spule auf einander bezüglich der Leiterbahnen der Spule 1a gegenüberliegenden Spulenoberflächen überdecken. Im gezeigten Beispiel überdeckt der Teil 4aa die obere Oberfläche der Spule 1a und der Teil 4ab die untere Oberfläche der Spule 1a.

Im in Figur 3 gezeigten Beispiel weist die Spule sieben Windungen auf, die in der Schnittansicht geschnitten werden. Die Windungen der Spule 1a umlaufen den Zentralbereich 3a.

Im in Figur 3 gezeigten Beispiel weist der nicht erfindungsgemäße passive Transponder elektrisch isolierende Schichten 7a und 7b auf, die die Spule 1a gegenüber der Abschirmung 4a elektrisch isolieren. Die elektrisch isolierenden Schichten 7a und 7b sind dazu zwischen der Spule 1a und den Teilen 4aa bzw. 4ab der Abschirmung 4a angeordnet.

Das in Figur 3 gezeigte Beispiel weist außerdem elektrisch isolierende Schichten 8a und 8b auf, die auf jenen der Spule 1a abgewandten Oberflächen der Abschirmung 4aa und 4ab angeordnet sind und den Transponder bzw. die Abschirmung 4aa, 4ab gegenüber einem den Transponder umgebenem Medium isolieren.

Als Blutersatzmedium dient hier eine Mischung aus 52,4% Wasser, 45% Zucker, 1,5% Natriumchlorid und 0,01 Thymol.

Die Spulen 1a und 1b hatten 11 und 9 Wicklungen im Flex-PCB.

Die Abschirmung 4a, 4b hilft, die Wechselwirkung des elektrischen Feldes mit dem umgebenden Medium zu verhindern. Hierdurch können die parasitieren Eigenschaften der Spule so beeinflusst werden, dass sie ihre Funktion auch im Blut gut erfüllen kann. Die Abschirmung ist insbesondere für dünne, planare Spulen nützlich, bei denen die Dicke der Spule ein kritischer Parameter ist. Besonders vorteilhaft kann die Spule eine implantierbare Spule sein, wo die Spule von Körpergeweben und Flüssigkeit umgeben ist.

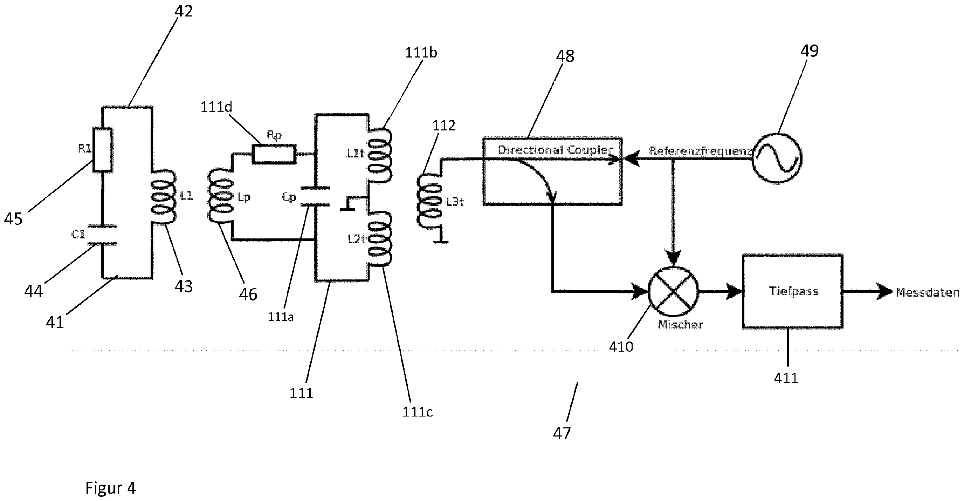

Figur 4 zeigt ein Beispiel eines Systems zum Auslesen eines erfindungsgemäßen passiven Transponders. Das Transpondersystem weist einen erfindungsgemäßen passiven Transponder 41 auf, der wie oben beschrieben ausgestaltet sein kann. Der Transponder 41 enthält wie vorstehend beschrieben einen Schwingkreis 42, dessen Resonanzfrequenz veränderlich sein kann, beispielsweise wenn der Schwingkreis 42 mit einem kapazitiven Drucksensor als Kapazität 44 ausgestaltet ist. Im gezeigten Beispiel weist der Schwingkreis 42 eine Induktivität 43 und eine Kapazität 44 auf. Es ist außerdem ein Widerstand 45 eingezeichnet. Das in Figur 4 gezeigte Transpondersystem weist außerdem eine Auslesevorrichtung 47 auf, die eine Ausleseinduktivität 46 enthält. Die Ausleseinduktivität ist hier an einen optionalen Balun-Übertrager 111 angeschlossen, der das nicht massenbezogene Signal der Auslesespule 46 (ein symmetrisches Signal) in ein massenbezogenes Signal umwandeln kann. Das vom Balun-Übertrager 111 erzeugte Signal wird hier dann an eine Sekundärspule 112 übertragen, die ein Signal erzeugt, das in einen massebezogenen Eingang eines Richtkopplers 48 eingespeist wird. Die Auslesespule weist im gezeigten Beispiel eine parasitäre Kapazität 111a auf. Zwischen der Auslesespule 46 und der Parallelschaltung aus der parasitären Kapazität 111a ist ein Widerstand 111d eingezeichnet. Er stellt den parasitären Widerstand der Auslesepule dar. Die Induktivitäten 111b und 111c sind zur Auslesespule 46 parallel geschaltet.

Eine Signalquelle 49 zur Erzeugung eines Wechselspannungssignals mit einer vorgegebenen Frequenz ist an einem Ausgang des Richtkopplers 48 angeschlossen. An einem zweiten Ausgang des Richtkopplers ist ein Mischer 410 angeordnet, der ein von der Ausleseinduktivität 46 oder dem Balun-Übertrager 111 in den Richtkoppler 48 einlaufendes Signal, das durch den zweiten Ausgang austritt, mit dem von der Signalquelle 49 erzeugten Wechselspannungssignal mischt. Das vom Mischer 410 ausgegebene Signal wird einem Tiefpassfilter 411 zugeführt, durch den beispielsweise Rausch- und Störanteile herausgefiltert werden. Das vom Tiefpassfilter 411 ausgegebene Signal kann als Messsignal verwendet werden. Dieses kann einem Sensor zugeführt werden, mit dem Amplitude und/oder Phase des von der Auslesespule 46 empfangenen Signals aus dem vom Tiefpassfilter 411 ausgegebene Signal bestimmbar sind. Der Sensor 412 kann optional auch ein vom Tiefpassfilter 411 ausgegebenes komplexes Signal in ein reelles Signal umrechnen, das dann zur Regelung verwendet wird.

Sofern der passive Transponder 41 nur einen Schwingkreis aufweist, kann die Signalquelle 49 zum Auslesen der Schwingkreise 42 ein einzelnes Sinussignal mit einer bestimmten Frequenz erzeugen. Sofern der passive Transponder 41 optional mehrere Schwingkreise 42 aufweist, können diese vorteilhafterweise voneinander verschiedene Frequenzen haben. In diesem Fall kann die Signalquelle 49 vorteilhafterweise ein Signal erzeugen, in dem eine der Zahl der unterschiedlichen Schwingkreise 42 entsprechende Zahl an Sinusfunktionen mit den unterschiedlichen Frequenzen der mehreren Schwingkreise 42 überlagert sind. Die unterschiedlichen Frequenzen können mit der Auslesespule 46 ausgelesen werden. Vorzugsweise wird das vom Richtkoppler 48 zum Mischer 410 ausgegebene Signal in diesem Fall mit den Sinussignalen mit den unterschiedlichen Resonanzfrequenzen getrennt gemischt. Es können hierzu vorteilhaft eine entsprechende Anzahl an getrennten Mischern 410 vorgesehen sein. Die auf diese Weise erzeugten getrennten Signale können dann jeweils einem Tiefpassfilter 411 und jeweils einem Sensor 412 zugeführt werden, der für alle Anteile jeweils die Amplitude und/oder Phase ermittelt. Es können dann für alle Frequenzanteile getrennte Rückkopplungen an die Signalquelle 49 erfolgen. In dem Fall, dass der passive Transponder 41 mehrere Schwingkreise mit unterschiedlichen Resonanzfrequenzen aufweist, wird also vorzugsweise für jede der Resonanzfrequenzen ein eigener Mischer 410, ein eigener Tiefpassfilter 411, und eine eigene Signalquelle 49 vorgesehen. Zusätzlich kann ein Addierer vorgesehen werden, der die von den Stellgliedern 49 erzeugten Signale überlagert und gemeinsam an den Richtkoppler 48 ausgibt. Vorteilhaft ist insbesondere eine Ausgestaltung mit zwei Schwingkreisen 42, da diese eine Messung von Druckwellengeschwindigkeiten erlaubt.

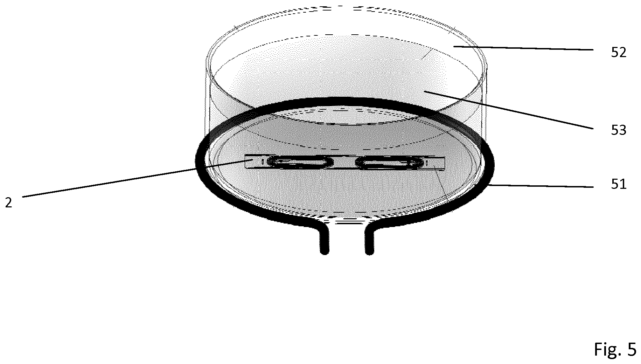

Figur 5 zeigt eine Vorrichtung zum beispielhaften Auslesen eines nicht erfindungsgemäßen Transponders in einer Testumgebung. Dabei ist der nicht erfindungsgemäße Transponder mit seinem Trägersubstrat 2 und den Spulen 1a und 1b in einer kreisringförmigen Auslesespule 51 angeordnet, und zwar derart, dass die Spulen 1a und 1b sich in der gleichen Ebene erstrecken wie die eine Windung der Auslesespule 51. Der Transponder ist dabei auf dem Boden eines Becherglases 52 angeordnet, dass von der Windung 51 der Auslesespule umlaufen wird. Das Becherglas ist mit einem Blutersatz 53 als umgebende Medium gefüllt.

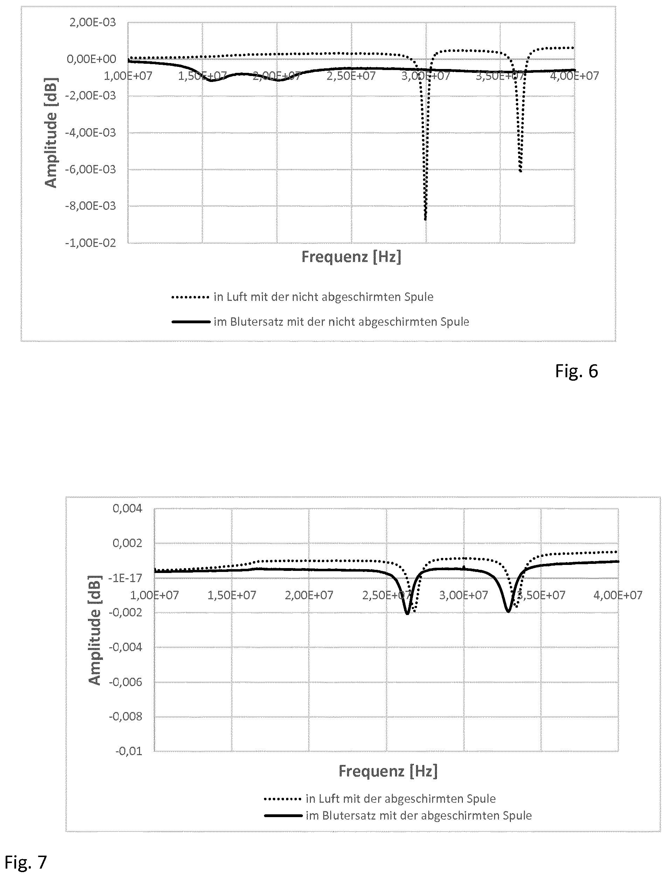

Figur 6 zeigt als Messergebnis in dem in Figur 5 gezeigten Aufbau eine Amplitude eines von passiven Transponder ausgehenden Signals, wobei die Spule des Transponders nicht abgeschirmt ist, wie in Figur 2 gezeigt. Die gepunktete Linie ist dabei eine Messung, in der der Transponder von Luft umgeben ist und die durchgezogene Linie ist eine Messung, in der der Transponder von Blutersatz umgeben ist. Es ist zu erkennen, dass der Transponder in Luft ein ausgeprägtes Resonanzsignal bei circa 30 und 36,5 MHz zeigt. Ist der Transponder hingegen von Blutersatz umgeben, so sind nur sehr schwache Resonanzsignale bei circa 16 MHz und 20 MHz zu erkennen.

Figur 7 zeigt die Amplitude des vom Transponder ausgehenden Signals, wobei hier der Transponder wie in Figur 1 gezeigt abgeschirmt ist, also ein erfindungsgemäßer Transponder ist. Dabei stellt die gepunktete Linie wiederum den Transponder in Luft dar und die durchgezogene Linie die Vermessung des Transponders in Blutersatz. Es sind nun in beiden Fällen ähnliche Resonanzen bei Frequenzen von circa 26,5 MHz und 33 MHz zu beobachten, die in Luft und in Blutersatz ungefähr gleich stark ausgeprägt sind.

In den Figuren 6 und 7 sind jeweils zwei Resonanzpeaks zu erkennen, da der Transponder im gezeigten Beispiel zwei Schwingkreise mit unterschiedlichen Resonanzfrequenzen aufweist.

Zusammenfassend zeigt sich, dass der Transponder ohne Abschirmung in Luft eine hohe Signalstärke und einen hohen Gütefaktor hat. In Blutersatz jedoch ist die Signalqualität und der Gütefaktor der nicht abgeschirmten Spule deutlich geringer als in Luft. Die Resonanzfrequenz verringert sich verglichen mit der Messung in Luft deutlich, was auf die elektrischen Eigenschaften des Blutersatzmediums zurückzuführen ist. Das Signal-Rausch-Verhältnis ist sehr gering. Dies ist in Figur 6 deutlich zu erkennen.

Die Abschirmung führt zu einer etwas geringeren Signalstärke und zu einer Verschiebung der Resonanzfrequenz. Diese kann noch reduziert werden, indem der Abstand zwischen der Abschirmung und der Spulenoberfläche und auch der Abstand zwischen den Spulenwindungen optimiert wird. Zu erkennen ist jedoch, dass die Signalqualität deutlich besser ist, als im Falle der fehlenden Abschirmung in Blutersatz. Der Gütefaktor ist nie vergleichbar mit der Messung in Luft.

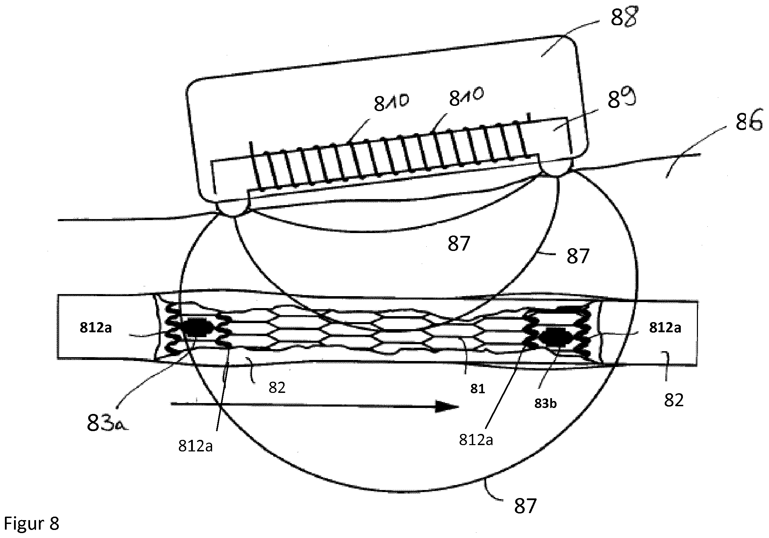

Figur 8 zeigt eine zylinderförmige Vorrichtung zum Durchfluss von Fluid.

Im in Figur 8 gezeigten Beispiel ist der passive Transponder 81 ein Stent 81, der in einem Blutgefäß 82 angeordnet ist. Der Stent 81 weist zwei kapazitive Drucksensoren 83a und 83b auf, die an unterschiedlichen Stellen entlang einer Zylinderachse des Stents 81 angeordnet sind und mit denen an unterschiedlichen Stellen entlang der Zylinderachse der Druck des Fluids im Inneren des Stents 81 messbar ist. Die Kapazitäten dieser Drucksensoren 83a und 83b sind jeweils mit einer Induktivität 812a, 812b zu jeweils einem Schwingkreis 811a, 811b verbunden. Eigenschaft derkapazitiven Drucksensoren 83a, 83b ist, dass die Kapazitäten der Drucksensoren 83a, 83b vom Druck des Fluids an der Stelle der Messung abhängen. Ändert sich die Kapazität des jeweiligen Drucksensors 83a, 83b, so ändert sich eine Resonanzfrequenz des entsprechenden Schwingkreises. Die Drucksensoren 83a, 83b bzw. die entsprechenden Schwingkreise weisen eine Antenne oder einen als Antenne wirkenden Bereich auf (eine Spule) und sind daher mittels eines elektromagnetischen Feldes von außerhalb der Leitung 82 zum Schwingen anregbar. Die Spulen 812a und 812b sind hier wie vorstehend beschrieben mit einer Abschirmung 4 vorgesehen, die in Figur 8 jedoch zur Verbesserung der Übersichtlichkeit nicht gezeigt wird.

Durch eine Auswerteeinheit 88 ist nun ein elektromagnetisches Wechselfeld 87 erzeugbar, mit welchem die Schwingkreise der Drucksensoren 83a, 83b zum Schwingen anregbar sind. Das elektromagnetische Feld enthält hierbei Wechselfelder mit den Resonanzfrequenzen der Schwingkreise der Drucksensoren 83a und 83b. Das elektromagnetische Feld 87 wird in dem in Figur 8 gezeigten Beispiel mittels einer Spule 810 erzeugt, die um einen Kern 89 gewickelt ist. Zur Erzeugung des elektromagnetischen Feldes 87 wird die Spule 810 mit einer Wechselspannung beaufschlagt, die Frequenzkomponenten enthält, die den erforderlichen Frequenzkomponenten des elektromagnetischen Feldes 87 entsprechen.

Die Auswerteeinheit 88 bildet zusammen mit der zylinderförmigen Vorrichtung 81 ein Pulswellengeschwindigkeitsmesssystem mit einem erfindungsgemäßen Transponder 81.

Die Pulswellengeschwindigkeit ist mit diesem Pulswellengeschwindigkeitsmesssystem auf verschiedene Weisen messbar. Das Verfahren wird hier am Beispiel einer flexiblen Leitung in einer technischen Vorrichtung dargestellt.

Wie beschrieben sind mittels des elektromagnetischen Feldes 87 die Schwingkreise der Drucksensoren 83a und 83b zum Schwingen anregbar. Hierzu wird das elektromagnetische Feld 87 mit Resonanzfrequenzen der Schwingkreise erzeugt. Der Zeitpunkt des Passierens einer Pulswelle an den Sensoren kann nun bestimmt werden, indem eine Änderung der Resonanz des jeweiligen Schwingkreises bestimmt wird. Aus der Differenz der Änderung der Resonanz an den beiden Drucksensoren 83a, 83b kann dann wie oben beschrieben die Pulswellengeschwindigkeit bestimmt werden.

In einem Beispiel des Verfahrens kann mit der Auswerteeinheit 88 eine Impedanz der Schwingkreise der Drucksensoren 83a und 83b bei der Resonanzfrequenz bei Normaldruck des Fluids in der Leitung 82 gemessen werden. Passiert nun eine Druckwelle einen der Drucksensoren 83a, 83b, so ändert sich die Resonanzfrequenz des entsprechenden Schwingkreises, wodurch die Impedanz des Schwingkreises bei Anregung mit der Resonanzfrequenz bei Normaldruck abfällt. Die Zeitpunkte, zu denen also eine Verringerung der Impedanz bei Anregung mit der Resonanzfrequenz bei Normaldruck, also in Abwesenheit von Pulswellen, festgestellt wird, können als Zeitpunkte des Passierens der Pulswelle gesetzt werden.

In einem alternativen Ausführungsbeispiel des Verfahrens ist es möglich, die Frequenz des elektromagnetischen Feldes 87 in einem Bereich zu variieren, der die für mögliche Drücke des Fluids auftretenden Resonanzfrequenzen der Schwingkreise der Drucksensoren 83a und 83b enthält. Die Frequenz kann dann periodisch variiert werden, so dass innerhalb einer Periode die Schwingkreise jeweils mit allen in Frage kommenden Frequenzen beaufschlagt werden. Es kann nun mittels der Auswerteeinheit 88 gemessen werden, bei welcher dieser Frequenzen die Schwingkreise der Drucksensoren 83a und 83b resonieren. Weicht die so bestimmte Resonanzfrequenz von der Resonanzfrequenz des entsprechenden Schwingkreises bei Normaldruck ab, deutet dies darauf hin, dass eine Pulswelle den entsprechenden Drucksensor 83a, 83b passiert. Der Zeitpunkt des Abweichens der Frequenz von der Resonanzfrequenz bei Normaldruck kann also als Zeitpunkt des Passierens der Pulswelle bestimmt werden. Auch hier können wiederum Schwellen eingesetzt werden, oberhalb derer eine Abweichung der Resonanzfrequenz von der Resonanzfrequenz bei Normaldruck als den Zeitpunkt des Passierens gesetzt wird.

In einer weiteren Ausgestaltung des Verfahrens ist es möglich, mittels der Auswerteeinheit 88 ein elektromagnetisches Feld mit einem breitbandigen Frequenzspektrum zu erzeugen, wobei das Frequenzspektrum die in Frage kommenden Resonanzfrequenzen für alle möglichen auftretenden Drücke der Schwingkreise der Drucksensoren 83a und 83b enthält. Nach Abschalten des elektromagnetischen Feldes schwingen die Schwingkreise aus und erzeugen dabei ihrerseits elektromagnetische Wechselfelder mit Frequenzen, die ihren momentanen Resonanzfrequenzen entsprechen. Durch Messung der Frequenzen dieser Felder können also direkt die aktuellen Resonanzfrequenzen der Schwingkreise gemessen werden. Wird diese Messung wiederholt durchgeführt, so sind also Zeitpunkte bestimmbar, zu denen die Resonanzfrequenzen der Schwingkreise von den Resonanzfrequenzen bei Normaldruck abweichen. Überschreitet diese Abweichung eine vorbestimmte Schwelle, so kann der Zeitpunkt dieses Überschreitens als Zeitpunkt des Passierens einer Druckwelle gesetzt werden. Eine Druckwelle, die die Vorrichtung 81 durchläuft, löst ein solches Ereignis an zwei aufeinanderfolgenden Zeitpunkten an den beiden Drucksensoren 83a, 83b aus. Aus der Differenz dieser Zeitpunkte und dem Abstand der Drucksensoren 83a, 83b kann also die Pulswellengeschwindigkeit bestimmt werden.

Das breitbandige elektromagnetische Feld kann beispielsweise als Puls mit einem kontinuierlichen Frequenzspektrum erzeugt werden.

## Patentansprüche

1. Passiver Transponder,
aufweisend zumindest eine Spule mit einer Mehrzahl an um einen Zentralbereich gewundenen Windungen außerdem aufweisend zumindest eine elektrisch leitfähige Abschirmung,
wobei
die Abschirmung zwei einander bezüglich der Windungen gegenüberliegende Spulenoberflächen überdeckt, welche Spulenoberflächen von gleichen Abschnitten der Windungen aufgespannt werden, wobei die Abschirmung den Zentralbereich zumindest teilweise nicht überdeckt,
wobei die Abschirmung in jedem Bereich, in dem sie eine der Spulenoberflächen überdeckt, zumindest eine Unterbrechung aufweist, die die Abschirmung in zum Verlauf der Windungen am Ort der Unterbrechung nicht paralleler Richtung durchtrennt, so dass ein Stromfluss in dem entsprechenden Bereich der Abschirmung in Richtung der Windungen verhinderbar ist,
**dadurch gekennzeichnet, dass** die Spule eine Zylinderspule ist,
und sich die Abschirmung zum einen über eine äußere Zylinderoberfläche der Zylinderspule und zum anderen über eine innere Zylinderoberfläche der Zylinderspule erstreckt.

2. Passiver Transponder nach einem der vorhergehenden Ansprüche, wobei zwischen der Spule und der Abschirmung zumindest eine elektrisch isolierende Schicht angeordnet ist, welche die Spule gegen die Abschirmung isoliert.

3. Passiver Transponder nach einem der vorhergehenden Ansprüche, wobei auf der Abschirmung auf deren der Spule abgewandten Oberflächen eine elektrisch isolierende Schicht angeordnet ist, welche die Abschirmung gegen ein den Transponder umgebendes Medium isoliert.

4. Passiver Transponder nach einem der vorhergehenden Ansprüche, wobei die Spule mit einer Kapazität zu einem Schwingkreis verschaltet ist.

5. Passiver Transponder nach einem der vorhergehenden Ansprüche, wobei die Abschirmung in Bereichen, in denen keine Unterbrechung vorliegt, Metallfolie und/oder leitfähigen Lack aufweist oder daraus besteht.

## Claims

1. A passive transponder,
comprising at least one coil with a plurality of turns wound around a central region,
additionally comprising at least one electrically conductive shield,
wherein
the shielding covers two coil surfaces opposite to each other with respect to the windings, which coil surfaces are spanned by equal portions of the windings, wherein the shield at least partially does not cover the central region,
wherein the shield, in each region in which it covers one of the coil surfaces, comprises at least one interruption which severs the shield in a direction non-parallel to the course of the turns at the site of the interruption, so that a flow of current in the direction of the turns can be prevented in said region of the shield,
**characterized in that** the coil is a cylindrical coil,
and the shield extends on the one hand over an outer cylinder surface of the cylindrical coil and on the other hand over an inner cylinder surface of the cylindrical coil.

2. The passive transponder according to any one of the preceding claims, wherein at least one electrically insulating layer is arranged between the coil and the shield, which layer insulates the coil with respect to the shield.

3. The passive transponder according to any one of the preceding claims, wherein an electrically insulating layer is arranged on the surfaces of the shield that face away from the coil, which layer insulates the shield with respect to a medium surrounding the transponder.

4. The passive transponder according to any one of the preceding claims, wherein the coil is connected to a capacitor to form a resonant circuit.

5. The passive transponder according to any one of the preceding claims, wherein the shield, in regions in which there is no interruption, comprises or consists of a metal foil and/or a conductive coating.

## Revendications

1. Transpondeur passif,
présentant au moins une bobine avec une pluralité de spires enroulées autour d'une zone centrale,
présentant en outre au moins un blindage électriquement conducteur,
dans lequel
le blindage recouvre deux surfaces de bobines opposées l'une à l'autre par rapport aux spires, lesquelles surfaces de bobines sont tendues par des sections identiques des spires, dans lequel le blindage ne recouvre pas, au moins partiellement, la zone centrale,
dans lequel le blindage présente, dans chaque zone dans laquelle il recouvre l'une des surfaces de bobine, au moins une interruption qui coupe le blindage dans une direction non parallèle au tracé des spires à l'endroit de l'interruption, de sorte qu'un flux de courant peut être empêché dans la zone correspondante du blindage dans la direction des spires,
**caractérisé en ce que** la bobine est une bobine cylindrique,
et le blindage s'étend d'une part sur une surface cylindrique extérieure de la bobine cylindrique et d'autre part sur une surface cylindrique intérieure de la bobine cylindrique.

2. Transpondeur passif selon l'une quelconque des revendications précédentes, dans lequel au moins une couche électriquement isolante est disposée entre la bobine et le blindage, laquelle couche isole la bobine du blindage.

3. Transpondeur passif selon l'une quelconque des revendications précédentes, dans lequel une couche électriquement isolante est disposée sur le blindage sur ses surfaces opposées à la bobine, qui isole le blindage d'un milieu entourant le transpondeur.

4. Transpondeur passif selon l'une quelconque des revendications précédentes, dans lequel la bobine est connectée à une capacité pour former un circuit oscillant.

5. Transpondeur passif selon l'une quelconque des revendications précédentes, dans lequel le blindage comporte une feuille métallique et/ou un vernis conducteur dans les zones où il n'y a pas d'interruption ou en est constitué.
